# EUROPÄISCHE PATENTSCHRIFT

(11) **EP 2 387 498 B1**
(45) Veröffentlichungstag und Bekanntmachung des Hinweises auf die Patenterteilung: **17.05.2017**
(21) Anmeldenummer: 09802092.8
(22) Anmeldetag: 21.12.2009
(51) Int. Cl.: B29D 28/00, D04H 3/04

(54) **MASCHENNETZ AUS BÄNDCHEN**
NETTING OF RIBBONS
FILET DE RUBANS

(30) Priorität: 16.01.2009 AT 612009
(43) Veröffentlichungstag der Anmeldung: 23.11.2011
(73) Patentinhaber: Landertshamer, Friedrich, 4064 Oftering (AT)
(72) Erfinder: Landertshamer, Friedrich, 4064 Oftering (AT)
(74) Vertreter: Patentanwaltskanzlei Hübscher
(86) Internationale Anmeldenummer: PCT/AT2009/000492
(87) Internationale Veröffentlichungsnummer: WO 2010/081179

(56) Entgegenhaltungen:
- EP-A1- 1 739 220
- DE-A1- 4 137 310
- GB-A- 2 314 802

## Beschreibung

### Technisches Gebiet

Die Erfindung bezieht sich auf ein Maschennetz aus in wenigstens zwei Scharen gelegten und einander scharenweise kreuzenden Bändchen, die in ihrer gegenseitigen Lage zwischen zwei Decklagen festgelegt sind, die einen zumindest zweischichtigen Aufbau mit einer den Bändchen zugekehrten Bindungsschicht aus einem thermoplastischen Zusatzwerkstoff und einer Trägerschicht höherer Zugfestigkeit aufweisen und über die Bindungsschicht mit den Bändchen verbunden sind.

### Stand der Technik

Um Maschennetze in Form von Gewirken, bei denen Fransenbändchen zur Maschenbildung um Schussbändchen geschlungen sind, so auszugestalten, dass sie eine insbesondere für den Einsatz in Verpackungsmaschinen ausreichend geringe Dehnung aufweisen, ist es bekannt (WO 2004/020721 A1), mit den Schuss- und/oder Fransenbändchen ein zusätzliches Bändchen aus thermoplastischem Kunststoff zu verstricken, das eine niedrigere Schmelztemperatur als die Schuss- und Fransenbändchen aufweist, sodass nach einem Heißpressen des Gewirkes an allen Kreuzungs- und Verbindungsstellen Schmelz- bzw. Siegelverbindungen auftreten und zugleich das Maschennetz geglättet wird. Nachteilig ist allerdings der mit der Herstellung dieser Gewirke verbundene Aufwand. Außerdem lassen sich trotz der Glättung durch das Heißpressen Dickstellen aufgrund der für die Maschenbildung notwendigen, durch die Umschlingung der Schussbändchen mit den Fransenbändchen bedingten Knotenpunkte nicht vermeiden.

Bei einer Gittermatte mit vier Reihen von über Kreuz gelegten Bändchen ist es bekannt (DE 41 37 310 A1), die Bändchen an den Kreuzungsstellen miteinander zu verbinden. Die Bändchen weisen zu diesem Zweck eine Trägerschicht höherer Zugfestigkeit und eine Bindungsschicht aus einem thermoplastischen Zusatzwerkstoff auf den den anliegenden Bändchen zugekehrten Seiten der Trägerschicht auf, sodass die vier Lagen der Bändchen in den Kreuzungsstellen miteinander verbunden werden, was eine entsprechende Knotenausbildung mit sich bringt.

Um bei einer Gittermatte höhere Kräfte in einer Vorzugsrichtung aufnehmen zu können, ist es darüber hinaus bekannt (GB 2 314 802 A), die in der Vorzugsrichtung verlaufenden Gitterstränge aus je zwei einander überdeckenden Bändchen zusammenzusetzen, die zwischen sich quer verlaufende Bändchen aufnehmen. Die beiden Bändchen der in der Vorzugsrichtung verlaufenden Gitterstränge sind zwischen den quer verlaufenden Bändchen miteinander und in den Kreuzungsstellen mit den querverlaufenden Bändchen über thermoplastische Bindungsschichten verbunden.

### Darstellung der Erfindung

Der Erfindung liegt somit die Aufgabe zugrunde, ein Maschennetz der eingangs geschilderten Art so auszugestalten, dass es einen vergleichsweise einfachen Aufbau aufweist, kaum Dickstellen bildet und vorteilhafte Vorraussetzungen für auch hohen Anforderungen entsprechende Festigkeitseigenschaften schafft.

Die Erfindung löst die gestellte Aufgabe durch die Merkmale des Anspruchs 1.

Da das Maschennetz aus einem Gelege mit einander scharenweise kreuzenden Bändchen besteht, ergeben sich einfache Herstellungsbedingungen, mit dem Vorteil, dass in den Kreuzungsbereichen der Bändchen keine die Handhabung des Maschennetzes beeinträchtigenden Dickstellen auftreten, weil die lediglich flach aneinanderliegenden Bändchen, vorzugsweise aus hochdichtem Polyethylen, sehr dünn ausgebildet sein können und beispielsweise eine Dicke zwischen 10 und 20 µm aufweisen. Das Festhalten der gegenseitigen Lage dieser kreuzweise gelegten Bändchen erfolgt durch zwei die Bändchen zwischen sich einschließenden Decklagen, die aus wenigstens zwei Schichten aufgebaut sind und neben einer Trägerschicht höherer Zugfestigkeit eine Bindungsschicht aus einem thermoplastischen Werkstoff umfassen, der beim Heißpressen des Maschennetzes für eine Schmelzverbindung bzw. eine Warmversiegelung der beiden Decklagen sowie der Decklagen und der dazwischen liegenden Bändchen sorgt, sodass die Bändchen über den thermoplastischen Zusatzwerkstoff an die Trägerschicht der Decklagen verschiebefest angebunden und durch diese Trägerschichten in ihrer gegenseitigen Lage festgehalten werden. Die thermische Behandlung des Geleges zur Verbindung der Bändchen mit den Decklagen bewirkt außerdem, dass das Maschennetz nur geringen Restschrumpfungen oder -dehnungen unterworfen ist.

Für besondere Einsatzzwecke können die Decklagen aus coextrudierten Folien gebildet werden, zwischen denen das Gelegenetz festgehalten wird, das in diesem Fall eine entsprechende Bewehrung der Folien darstellt. Im Einsatzfall für Verpackungen soll jedoch der Netzcharakter erhalten bleiben, sodass die Decklagen aus mit Abstand voneinander verlaufenden, parallelen Lagestreifen gebildet werden, wobei die Lagestreifen der beiden Decklagen einander überdecken und somit die durch die kreuzweise gelegten Bändchen gebildeten Maschen des Maschennetzes queren. Die Bändchen werden daher zwischen den zusammenwirkenden Lagestreifen der beiden Decklagen entlang dieser Lagestreifen verschiebefest festgehalten. Der gegenseitige Abstand der Lagestreifen im Vergleich zur Maschenweite des Netzgewebes und die Breite dieser Lagestreifen bestimmen dabei die Formstabilität der Netzmaschen.

Es braucht wohl nicht besonders hervorgehoben zu werden, dass es im Rahmen der Erfindung auch möglich ist, eine Decklage zumindest teilweise als Folie auszubilden, die mit Lagestreifen der gegenüberliegenden Decklage zusammenwirkt. Entscheidend ist ja, dass über die Decklagen nicht nur eine verschiebefeste Verbindung der Bändchen mit den Decklagen erreicht wird, sondern zusätzlich die Bändchen in ihrer gegenseitigen Lage mit Hilfe der Trägerschicht der Decklage fixiert werden, was sowohl mit folienartigen Decklagen als auch mit Lagestreifen erreicht werden kann, deren Breite erheblich schmäler als die der Bändchen ist.

### Kurze Beschreibung der Zeichnung

In der Zeichnung ist der Erfindungsgegenstand beispielsweise dargestellt. Es zeigen
- Fig. 1: ein erfindungsgemäßes Maschennetz ausschnittsweise in einer zum Teil aufgerissenen, schematischen Draufsicht,
- Fig. 2: einen schematischen Schnitt nach der Linie II-II der Fig. 1 in einem größeren Maßstab und
- Fig. 3: eine der Fig. 2 entsprechende Darstellung eines Schnitts nach der Linie III-III der Fig. 1.

### Weg zur Ausführung der Erfindung

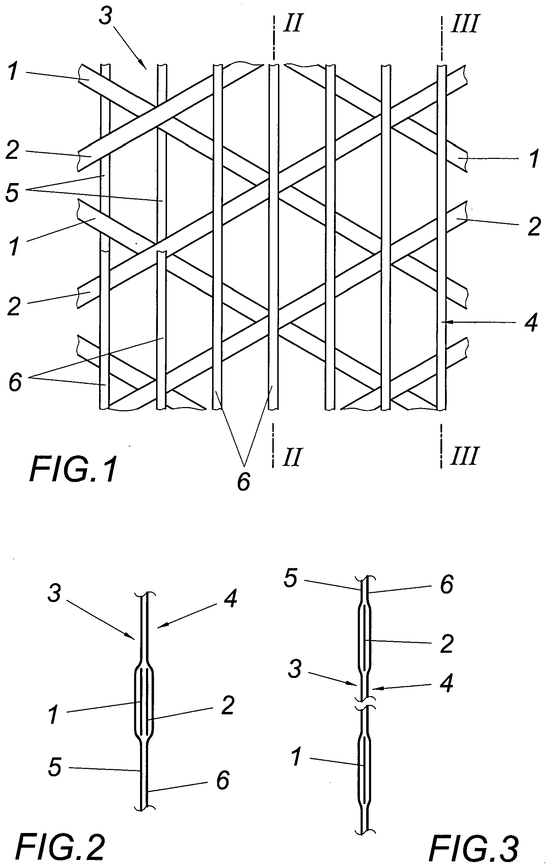

Das in der Fig. 1 dargestellte Maschennetz stellt ein Gelege aus zwei einander kreuzenden Scharen von Bändchen 1, 2 dar, die mit Hilfe von zwei Decklagen 3, 4 in Form von mit Abstand voneinander angeordneten, parallelen Lagestreifen 5 und 6 in ihrer gegenseitigen Lage festgehalten werden. Wie der Fig. 1 entnommen werden kann, überdecken die Lagestreifen 5 der einen Decklage 3, die gemäß der Darstellung nach der Fig. 1 die untere Decklage bildet, und die Lagestreifen 6 der anderen oberen Decklage 4 einander, sodass die Bändchen 1, 2 zwischen den miteinander verbundenen Lagestreifen 5, 6 fixiert sind, ohne dass die Bändchen 1, 2 im Bereich ihrer Kreuzungsstellen miteinander verbunden werden müssen.

Damit die Decklagen 3, 4 ihre Aufgabe hinsichtlich der Lagefixierung der kreuzweise gelegten Bändchen 1, 2 erfüllen können, sind diese Decklagen 3, 4 bzw. die Lagestreifen zumindest aus zwei Schichten aufgebaut, nämlich einer Trägerschicht mit einer ausreichenden Zugfestigkeit und einer Bindungsschicht auf der dem Bändchen 1, 2 zugekehrten Seite der Trägerschicht. Diese Bindungsschicht besteht aus einem thermoplastischen Werkstoff, der beim Heißpressen des Netzgeleges eine Verbindung zwischen den aneinanderliegenden Lagestreifen 5, 6 der Decklagen 3, 4 sowie zwischen den Lagestreifen 5, 6 und den anliegenden Bändchen 1, 2 durch eine Schmelzverbindung oder eine Heißsiegelung mit sich bringt. Die Lagestreifen können daher beispielsweise eine Trägerschicht aus hochdichtem Polyethylen und einer Bindungsschicht aus niederdichtem Polyethylen aufweisen. Coextrudierte Folien aus hochdichtem und niederdichtem Polyethylen können zu diesem Zweck in Streifen geschnitten werden. Die Bändchen selbst sind so auszuwählen, dass sie die auftretenden Belastungen aufnehmen können. Diese Bändchen können daher ebenfalls aus hochdichtem Polyethylen bestehen, wobei eine Beschichtung mit niederdichtem Polyethylen möglich, aber nicht erforderlich ist.

Nach dem Heißpressen des Netzgeleges kann ein Maschennetz erhalten werden, das formstabil ist, eine nur sehr geringe Restschrumpfung und - dehnung aufweist und mit gleichartigen Netzen, aber auch mit Folien u. dgl. verschweißt werden kann.

## Patentansprüche

1. Maschennetz aus in wenigstens zwei Scharen gelegten und einander scharenweise kreuzenden Bändchen (1, 2), die in ihrer gegenseitigen Lage zwischen zwei Decklagen (3, 4) festgelegt sind, die einen zumindest zweischichtigen Aufbau mit einer den Bändchen (1, 2) zugekehrten Bindungsschicht aus einem thermoplastischen Zusatzwerkstoff und einer Trägerschicht höherer Zugfestigkeit aufweisen und über die Bindungsschicht mit den Bändchen (1, 2) verbunden sind, **dadurch gekennzeichnet, dass** die nicht miteinander verbundenen Bändchen (1, 2) zwischen den miteinander über die Bindungsschicht aus dem thermoplastischen Zusatzwerkstoff verbundenen Decklagen (3, 4) fixiert sind.

2. Maschennetz nach Anspruch 1, **dadurch gekennzeichnet, dass** zumindest eine Decklage (3, 4) mit Abstand voneinander verlaufende, parallele Lagestreifen (5, 6) aufweist.

3. Maschennetz nach Anspruch 2, **dadurch gekennzeichnet, dass** beide Decklagen (3, 4) parallele Lagestreifen (5, 6) aufweisen, wobei die Lagestreifen (5, 6) der beiden Decklagen (3, 4) einander überdecken.

## Claims

1. Meshwork consisting of ribbons (1, 2) which are laid in at least two groups, intersect one another in the groups and are fixed between two cover layers (3, 4) in their mutually-related position, said cover layers having an at least two-layer configuration with a bonding layer, which faces the ribbons (1, 2) and consists of a thermoplastic filler material, and a carrier layer having a higher tensile strength, and said cover layers being connected to the ribbons (1, 2) via the bonding layer, **characterised in that** the ribbons (1, 2) which are not connected to one another are fixed between the cover layers (3, 4) which are connected to one another via the bonding layer consisting of the thermoplastic filler material.

2. Meshwork as claimed in claim 1, **characterised in that** at least one cover layer (3, 4) has parallel positional strips (5, 6) which extend at a spaced interval from one another.

3. Meshwork as claimed in claim 2, **characterised in that** both cover layers (3, 4) have parallel positional strips (5, 6), wherein the positional strips (5, 6) of the two cover layers (3, 4) cover one another.

## Revendications

1. Réseau de mailles à base de rubans (1, 2), se croisant de manière groupée et mis en place dans au moins deux groupes, qui sont fixés dans leur position opposée entre deux couches de recouvrement (3, 4) qui présentent une structure à au moins deux strates avec une couche de liaison en matériau d'apport thermoplastique, tournée vers les rubans (1, 2), et une couche support plus résistante et sont reliées avec les rubans (1, 2) par l'intermédiaire de la couche support, **caractérisé en ce que** les rubans (1, 2) non reliés ensembles sont fixés entre les couches de recouvrement (3, 4) reliées ensemble par le biais de la couche de liaison en matériau d'apport thermosplastique.

2. Réseau de mailles selon la revendication 1, **caractérisé en ce qu'**au moins une couche de recouvrement (3, 4) présente des bandes de position (5, 6) parallèles et espacées les unes des autres.

3. Réseau de mailles selon la revendication 2, **caractérisé en ce que** les deux couches de recouvrement (3, 4) présentent des bandes de position (5, 6) parallèles, les bandes de position (5, 6) des deux couches de recouvrement (3, 4) se recouvrant mutuellement.
